Europäisches Patentamt

European Patent Office

Office européen des brevets

(11) Numéro de publication : **0 016 436**
**B1**

(12) **FASCICULE DE BREVET EUROPÉEN**

(45) Date de publication du fascicule du brevet :
22.06.83

(21) Numéro de dépôt : 80101350.9

(22) Date de dépôt : 14.03.80

(51) Int. Cl.³ : **F 15 B 13/044**, F 16 K 31/06,
G 05 D 16/20

(54) **Servo-valve.**

(30) Priorité : 26.03.79 FR 7907577

(43) Date de publication de la demande :
01.10.80 Bulletin 80/20

(45) Mention de la délivrance du brevet :
22.06.83 Bulletin 83/25

(84) Etats contractants désignés :
BE DE GB IT NL SE

(56) Documents cités :
DE A 2 725 917
DE B 1 025 693
FR A 1 173 269
FR A 1 201 343
FR A 2 059 947
FR A 2 311 394

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Bouvet, Jean-Marie**
**133, rue de Silly**
**F-92100 Boulogne Billancourt (FR)**
Inventeur : **Berthou, Claude**
**3, boulevard Beaumarchais**
**F-78330 Fontenay le Fleury (FR)**
Inventeur : **Jallas, Michel**
**rue du Docteur Debat**
**F-92380 Garches (FR)**

(74) Mandataire : **Casalonga, Alain et al**
**BUREAU D.A. CASALONGA OFFICE JOSSE & PETIT**
**Baaderstrasse 12-14**
**D-8000 München 5 (DE)**

EP 0 016 436 B1

Jouve, 18, rue St-Denis, 75001 Paris, France

Servo-valve

L'invention concerne les valves de servo-commandes hydrauliques à commande électro-magnétique destinées à assurer la distribution hydraulique ainsi que la régulation de pression d'admission et de vidange d'un vérin hydraulique. Elle peut également être utilisée pour réguler une pression de ligne de boîte de vitesses automatique.

De telles servo-valves sont particulièrement utilisées dans la commande automatique des embrayages de véhicules automobiles, ainsi que dans la commande des embrayages et des freins des boîtes de vitesses automatiques.

On connaît déjà différents types de servo-valves qui sont en général constitués par un premier étage, comprenant principalement une palette obturant une buse, et un deuxième étage à tiroir hydraulique piloté par le premier étage.

On connaît également un autre type de servo-valves dans lequel les déplacements d'un tiroir hydraulique sont contrôlés par des mesures électriques servant à asservir en position, par voie électronique, un tiroir commandé par un électro-aimant.

Le FR-A-1 173 269 décrit un dispositif dans lequel les deux extrémités opposées du tiroir et du plongeur sont placées respectivement dans des chambres d'extrémité connectées à la pression hydraulique distribuée. Le tiroir et le plongeur sont en contact l'un avec l'autre. Le contact entre le tiroir et le plongeur a lieu à l'intérieur d'une chambre sous pression. Aucun effet hydraulique différentiel ne résulte de l'application de la pression distribuée aux extrémités opposées du tiroir et du plongeur.

Ces diverses solutions ont pour inconvénients principaux d'être encombrantes et coûteuses.

Le but de l'invention est d'éliminer les inconvénients précédents, c'est-à-dire de réaliser un dispositif simple et peu encombrant qui, à l'aide d'un tiroir unique, assure à la fois la distribution ainsi que la régulation de la pression et sans nécessiter de capteur de position ni de dispositif électronique d'asservissement.

La servo-valve hydraulique selon l'invention comportant un tiroir distributeur commandé par un électro-aimant à plongeur placé selon le même axe, le tiroir et le plongeur étant simplement en contact l'un avec l'autre et les deux extrémités opposées de l'un et de l'autre étant placées respectivement dans des chambres d'extrémité connectées à la pression hydraulique distribuée, est caractérisée par le fait que le contact entre le plongeur et le tiroir a lieu à l'intérieur d'une chambre sans pression et que la section du plongeur débouchant dans la chambre d'extrémité correspondante est légèrement différente de la section du tiroir débouchant dans la chambre d'extrémité correspondante, dans un sens tel que l'effet hydraulique différentiel qui résulte de l'application de la pression distribuée produise un déplacement du tiroir dans le sens d'une réduction de cette pression distribuée. D'autres caractéristiques de l'invention se trouvent dans les revendications dépendantes.

L'invention consiste à utiliser un tiroir distributeur actionné par un électro-aimant à plongeur et à utiliser la pression distribuée pour repousser hydrauliquement l'un vers l'autre le tiroir et le plongeur avec des étranglements pour amortir les oscillations. En utilisant des sections légèrement différentes pour le plongeur et le tiroir on réalise une boucle de rétro-action de la pression distribuée sur la position du tiroir, et en utilisant en outre un électro-plongeur du type polarisé alimenté par une intensité de courant pouvant passer de valeur négative à des valeurs positives, on double la capacité de la régulation. Enfin, pour éviter l'hystérésis des courbes de pression en fonction du courant, l'électro-aimant peut être alimenté par un courant pulsé ou alternatif à composante continue.

D'autres particularités de l'invention apparaîtront dans la description qui va suivre d'un mode de réalisation pris comme exemple et représenté sur les dessins annexés, sur lequel :

la figure 1 est une coupe axiale du dispositif selon l'invention avec le schéma de son raccordement hydraulique ;

la figure 2 représente le diagramme symbolique de la régulation ;

la figure 3 représente la courbe de régulation de la pression en fonction de l'intensité.

La servo-valve 1 est alimentée par un circuit hydraulique classique comprenant un bac 2, une crépine 3, une pompe 4 à moteur d'entraînement 5 et un limiteur de pression 6 sur la conduite 7 amenant la pression hydraulique à la servo-valve 1. La pression distribuée et régulée par la servo-valve 1 sort de celle-ci par la conduite 8 qui alimente un vérin 9, lequel commande par exemple un embrayage ou un frein.

Le tiroir hydraulique unique 10 est de type classique avec une gorge centrale qui se déplace entre trois espaces annulaires 11, 12 et 13 du bloc de la servo-valve, l'espace 11 étant réuni à la canalisation 7 d'arrivée de la pression, l'espace 12 à la canalisation 8 de distribution au vérin 9 et l'espace 13 à la décharge vers le bac 2. L'électro-aimant à plongeur 14 comporte un équipage mobile 15 dont l'axe est dans le prolongement de l'axe du tiroir 10, avec un bout d'axe 16 qui débouche dans une chambre 17, et un autre bout d'axe 18 qui débouche dans une deuxième chambre 19 dans laquelle débouche également l'extrémité 20 du tiroir 10, ce dernier comportant lui-même une autre extrémité 21 qui débouche dans une troisième chambre 22 qui contient un ressort de rappel 23.

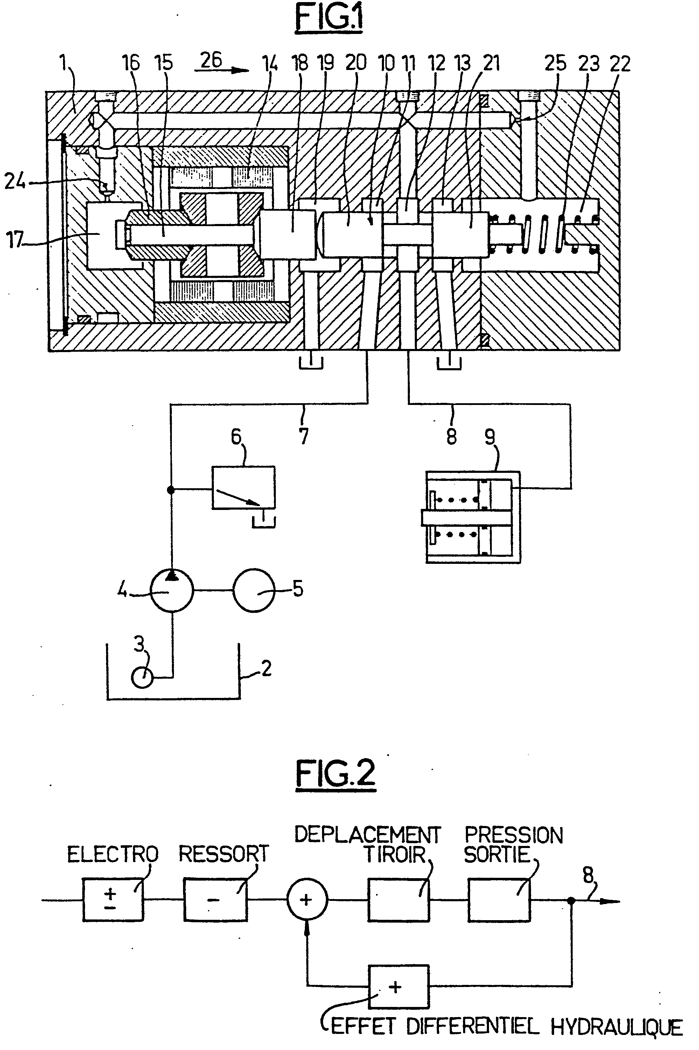

Conformément à l'invention les chambres 17 et 22 sont réunies par des conduits hydrauliques visibles sur la fig. 1 à la chambre 12 de laquelle part la pression distribuée, et la chambre 19 est réunie à la décharge vers le bas 2. De cette

**0 016 436**

manière, les poussées hydrauliques qui prennent naissance sur le tiroir 10 et sur l'équipage mobile 15 du plongeur ont pour effet de pousser constamment en contact l'un vers l'autre ces deux éléments dans toutes les circonstances.

D'autre part, dans le trajet hydraulique entre la chambre annulaire 12 et la chambre 17 il est prévu un étranglement 24, et de la même façon dans le trajet entre cette même chambre 12 et la chambre 22 il est prévu un autre étranglement 25. De cette manière, tous les mouvements d'oscillation de l'ensemble tiroir 10, plongeur 15 en contact l'un contre l'autre se trouvent amortis par ces étranglements.

·Selon une autre particularité de l'invention, la section des bouts d'axe 16 et 18 est choisie légèrement différente, par exemple, dans l'exemple choisi, supérieure à la section du tiroir 10, de manière que la pression distribuée appliquée sur les chambres 17 et 22 produise un effet différentiel dans le sens de la réduction de la pression distribuée, c'est-à-dire dans le cas de la fig. 1 en déplaçant le tiroir 10 vers la droite dans le sens de la flèche 26 à l'encontre du ressort 23.

De cette façon on obtient la distribution et la régulation de la pression distribuée à l'aide d'un seul et même tiroir 10, et d'autre part on obtient un asservissement de la position du tiroir 10 sans nécessiter aucun capteur de position. Cette boucle d'asservissement est représentée schématiquement par la fig. 2 et si l'on compte positivement dans le sens de la flèche 26 les efforts subis par l'ensemble mobile, on voit que celui-ci ne peut être en équilibre que si l'ensemble des forces axiales qui agissent sur lui s'annule algébriquement. Ces forces sont constituées par la poussée du ressort 23 (négative), la poussée de l'électro-plongeur 15 et l'effet différentiel hydraulique sur les sections 16 et 10 qui est positif est proportionnel à la pression en 8. En effet, à partir d'un tel équilibre, tout déplacement de l'ensemble mobile dans le sens positif, c'est-à-dire dans le sens de la flèche 26, produit une réduction de la pression en 8, donc par réduction de l'effet différentiel un déséquilibre dans le sens négatif s'opposant au déplacement perturbateur. De même, à tout déplacement dans le sens négatif correspond la naissance d'une force de rappel positive s'opposant au mouvement perturbateur. La boucle agit donc bien dans le sens d'une régulation et la pression de sortie en 8, stabilisée par cette boucle de rétro-action, est d'autre part sous la dépendance directe et proportionnelle de l'effort fourni par l'électro-aimant.

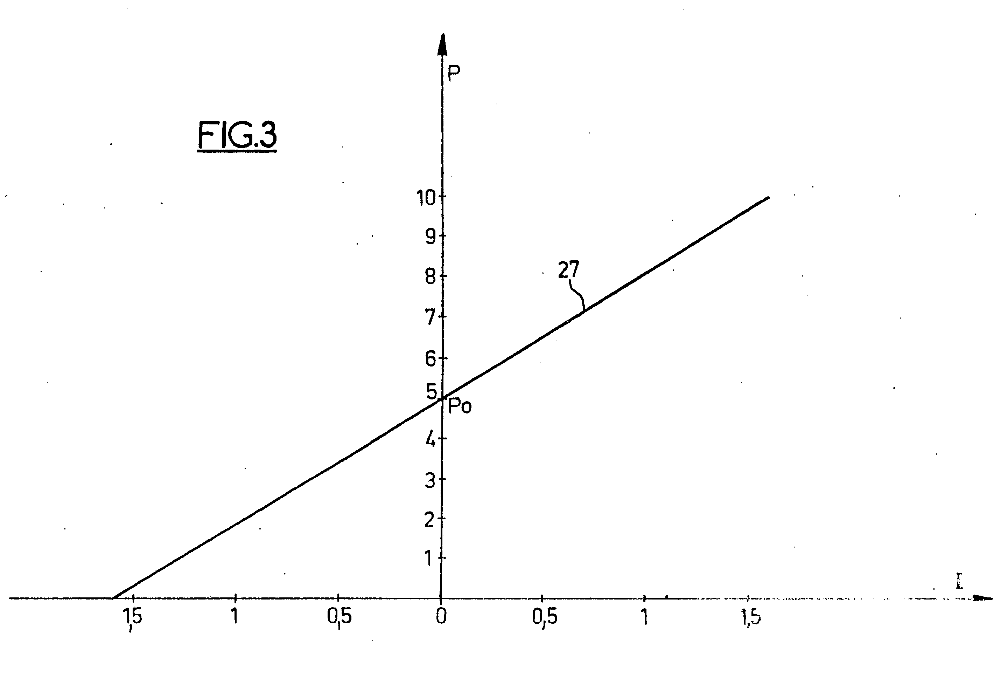

En particulier, en l'absence d'excitation de l'électro-aimant 14, on voit que la pression distribuée en 8 n'est pas nulle mais atteint une valeur représentée par Po sur la fig. 3 et correspondant à l'équilibrage du tarage du ressort 23 par l'effet différentiel hydraulique. A toute augmentation du courant I dans l'électro 14 correspond un accroissement linéaire de la pression P distribuée selon la droite 27 représentée sur la fig. 3.

Enfin, selon l'invention, il est possible de doubler la capacité de régulation du dispositif en utilisant comme électro-plongeur 14 un électro-aimant polarisé tel que celui décrit dans le brevet français 2.311.394 au nom de la demanderesse ainsi que dans son premier certificat d'addition n° 2.319.184. En effet, cette disposition permet de couvrir le restant de la droite de régulation 27 au-dessous du point Po par inversion du sens du courant I dans l'électro 14.

En réalité, les courbes pratiques de régulation présentent un léger hystérésis par rapport à la droite 27 en raison notamment des frottements auxquels l'ensemble mobile 10-15 est soumis. Pour éviter ce phénomène et rendre la régulation encore plus précise, on peut conformément à l'invention alimenter l'électro 14 par un courant continu haché, positif ou négatif, ou encore par un courant alternatif superposé à un courant continu positif ou négatif.

En définitive, on voit que l'organe récepteur, c'est-à-dire le vérin 9, reçoit grâce au dispositif selon l'invention une pression de remplissage et de vidange modulée avec précision en fonction courant d'alimentation de l'électro 14.

**Revendications**

1. Servo-valve hydraulique (1) comportant un tiroir distributeur (10) commandé par un électro-aimant à plongeur (14) placé selon le même axe, le tiroir (10) et le plongeur (15) étant simplement en contact l'un avec l'autre et les deux extrémités opposées (16, 21) de l'un et de l'autre étant placées respectivement dans des chambres d'extrémité (17, 22) connectées à la pression hydraulique distribuée, caractérisée par le fait que le contact entre le plongeur (15) et le tiroir (10) a lieu à l'intérieur d'une chambre (19) sans pression et que la section (16) du plongeur (15) débouchant dans la chambre d'extrémité (17) correspondante est légèrement différente de la section (21) du tiroir (10) débouchant dans la chambre d'extrémité (22) correspondante, dans un sens tel que l'effet hydraulique différentiel qui résulte de l'application de la pression distribuée produise un déplacement du tiroir (10) dans le sens d'une réduction de cette pression distribuée.

2. Servo-valve selon la revendication 1, caractérisée par le fait que les deux connexions hydrauliques entre la pression distribuée et l'une et l'autre chambre d'extrémité (17, 22) comportent chacune un étranglement (24, 25) destiné à amortir les oscillations de l'ensemble mobile tiroir et plongeur (10, 15).

3. Servo-valve selon l'une quelconque des revendications précédentes, dans laquelle l'ensemble mobile tiroir et plongeur (10, 15) est sollicité axialement par une force de rappel élastique (23) dans le sens de l'augmentation de la pression distribuée, caractérisée par le fait que l'électro-aimant à plongeur (14) est du type polarisé à deux sens d'action.

4. Servo-valve selon l'une quelconque des revendications précédentes, caractérisée par le fait que l'électro-aimant (14) est alimenté par un courant continu haché, de polarité convenable, ou par un courant alternatif à composante continue.

## Claims

1. A hydraulic servo-valve (1) comprising a directional control spool (10) controlled by a plunger-type solenoid (14) placed along the same axis, with the spool (10) and the plunger (15) being simply in contact with each other and with the two opposite ends (16, 21) of each being placed respectively in end chambers (17, 22) connected to the distributed hydraulic pressure, characterized in that the contact between the plunger (15) and the spool (10) takes place inside a pressure-free chamber (19) and in that the cross-section (16) of the plunger (15) entering the corresponding end chamber (17) is slightly different from the cross-section (21) of the spool (10) entering the corresponding end chamber (22), in such a direction that the differential hydraulic effect arising from application of the distributed pressure produces a movement of the spool (10) in a direction tending to reduce this distributed pressure.

2. The servo-valve according to claim 1, characterized in that the two hydraulic connections between the distributed pressure and each of the end chambers (17, 22) each comprise a choke (24, 25) designed to damp the oscillations of the mobile spool-plus-plunger (10, 15) unit.

3. The servo-valve according to any of the previous claims, wherein the mobile spool-plus-plunger unit (10, 15) has an axial elastic (23) return force applied to it in a direction tending to increase the distributed pressure, characterized in that the plunger-type solenoid (14) is of the biased type having two directions of operation.

4. The servo-valve according to any of the preceding claims, characterized in that the solenoid (14) is fed with a chopped direct current, of appropriate polarity, or by an alternating current with a direct current component.

## Ansprüche

1. Hydraulisches Servoventil (1) mit einem Steuerschieber (10), gesteuert von einem gleichachsigen Elektromagnet mit Tauchkolben (14), wobei sich der Schieber (10) und der Tauchkolben (15) einfach berühren und die beiden gegenüberliegenden Enden (16, 21) des einen und des anderen jeweils in äusseren Kammern (17, 22) liegen, die mit dem hydraulischen Vorteilungsdruck in Verbindung stehen, dadurch gekennzeichnet, dass die Berührungsstelle zwischen dem Tauchkolben (15) und dem Schieber (10) im Inneren einer drucklosen Kammer (19) liegt und dass sich der Querschnitt (16) des Tauchkolbens (15), der in die zugeordnete äussere Kammer (17) ragt, von dem Querschnitt (21) des Schiebers (10), der in die zugeordnete äussere Kammer (22) ragt, etwas unterscheidet in dem Sinne, dass die unterschiedliche hydraulische Wirkung, die beim Aufbringen des Verteilungsdrucks entsteht, eine Verschiebung des Schiebers (10) im Sinne einer Verminderung des Verteilungsdrucks hervorruft.

2. Servoventil gemäss Anspruch 1, dadurch gekennzeichnet, dass die beiden hydraulischen Verbindungen zwischen dem Verteilungsdruck und der einen bzw. der anderen äusseren Kammer (17, 22) jeweils eine Einschnürung (24, 25) enthalten, die dazu bestimmt ist, die Schwingungen der beweglichen Baugruppe Schieber und Tauchkolben (10, 15) zu dämpfen.

3. Servoventil gemäss einem beliebigen der vorstehenden Ansprüche, in dem die bewegliche Baugruppe Schieber und Tauchkolben (10, 15) durch eine elastische Rückstellkraft (23) im Sinne einer Erhöhung des Verteilungsdrucks axial beaufschlagt wird, dadurch gekennzeichnet, dass der Elektromagnet mit Tauchkolben (14) von einem Typ ist, der in zwei Wirkrichtungen gepolt ist.

4. Servoventil gemäss einem beliebigen der vorstehenden Ansprüche, dadurch gekennzeichnet, dass der Elektromagnet (14) mit gehacktem Gleichstrom passender Polarität oder mit Wechselstrom mit Gleichstromkomponente gespeist wird.

**0 016 436**

# FIG.1

# FIG.2

ELECTRO   RESSORT   DEPLACEMENT TIROIR   PRESSION SORTIE

EFFET DIFFERENTIEL HYDRAULIQUE

FIG.3